# FASCICULE DE BREVET EUROPEEN

(11) **EP 0 512 886 B1**
(45) Date de publication et mention de la délivrance du brevet: **24.07.1996**
(21) Numéro de dépôt: 92401173.7
(22) Date de dépôt: 23.04.1992
(51) Int. Cl.: G21C 17/022, G01K 13/02

(54) **Dispositif de mesure de la température du fluide de refroidissement primaire d'un réacteur nucléaire à circulation interne accélérée**
Vorrichtung zur Primärkühlmitteltemperaturmessung eines Kernreaktors mit beschleunigter inerer Strömung
Device for measuring the temperature of the primary coolant of a nuclear reactor with accelerated internal circulation

(30) Priorité: 03.05.1991 FR 9105484
(43) Date de publication de la demande: 11.11.1992
(73) Titulaire: FRAMATOME, 92400 Courbevoie (FR)
(72) Inventeur: Boulet, Michel, F-95240 Cormeilles-en-Parisis (FR)
(74) Mandataire: Bouget, Lucien

(56) Documents cités:
- DE-U- 8 520 484
- FR-A- 2 518 747
- GB-A- 734 702
- GB-A- 2 003 659
- US-A- 4 987 749

## Description

L'invention concerne un dispositif de mesure de la température du fluide de refroidissement primaire d'un réacteur nucléaire, à circulation interne accélérée.

Les réacteurs nucléaires utilisant un fluide de refroidissement primaire du coeur du réacteur, tel que les réacteurs nucléaires refroidis par de l'eau sous pression, comportent une cuve dans laquelle est disposé le coeur du réacteur constitué par des assemblages combustibles et un circuit primaire comportant au moins une boucle sur laquelle est disposé un générateur de vapeur à l'intérieur duquel le fluide de refroidissement primaire du réacteur assure l'échauffement et la vaporisation d'eau d'alimentation. Chacune des boucles du circuit primaire comporte des tuyauteries de grand diamètre et de forte épaisseur dans lesquelles circule le fluide de refroidissement primaire.

L'une des tuyauteries ou branche chaude, relie la cuve au générateur de vapeur et assure le transfert du fluide primaire échauffé au contact du coeur dans la partie primaire du générateur de vapeur.

Une autre tuyauterie ou branche froide assure le retour du fluide de refroidissement dans la cuve, après son passage dans le générateur de vapeur.

Pour assurer la conduite et le contrôle de fonctionnement des réacteurs nucléaires, il est nécessaire de mesurer la température du fluide primaire qui doit être maintenue impérativement dans un intervalle prédéterminé, pour assurer un fonctionnement satisfaisant du réacteur nucléaire.

On connaît des dispositifs de mesure de la température du fluide de refroidissement primaire d'un réacteur nucléaire comportant un corps métallique appelé écope fixé dans la paroi d'une canalisation primaire, de manière à présenter une partie saillante à l'intérieur de la canalisation primaire en forme de doigt de gant et percé d'au moins un canal communiquant avec le volume intérieur de la canalisation primaire par une pluralité d'ouvertures réparties dans une direction sensiblement radiale par rapport à la canalisation. Une sonde de mesure de température est fixée à l'intérieur du canal de l'écope, de manière à venir en contact avec le fluide primaire pénétrant dans le canal de l'écope par les ouvertures traversant la paroi du doigt de gant.

Il peut être nécessaire également de prévoir une ouverture de sortie du fluide traversant la paroi du doigt de gant dans une zone située à l'opposé des ouvertures d'entrée du fluide.

Ces dispositifs permettent de réaliser une mesure directe de la température du fluide primaire prenant en compte la stratification existant dans la tuyauterie primaire et se traduisant par un gradient de température dans la direction radiale, du fait de la répartition des ouvertures d'entrée du fluide de refroidissement dans l'écope.

Toutefois, la mesure de température obtenue n'est pas entièrement fiable et le temps de réponse du dispositif n'est pas extrêmement rapide du fait que le fluide ne se trouve pas mélangé et homogénéisé de manière efficace avant la mesure et que sa vitesse de circulation à l'intérieur du canal de l'écope est relativement faible.

On connaît également, par la demande de brevet EP-A-0.493.142 déposée le 28 décembre 1990 par la Société FRAMATOME, un dispositif de mesure de la température du fluide de refroidissement primaire d'un réacteur nucléaire à eau sous pression qui comporte au moins trois éléments de prélèvement de fluide de refroidissement traversant la paroi d'une partie sensiblement horizontale de la branche chaude, répartis à la périphérie de la branche chaude et un élément de réintroduction de fluide de refroidissement dans la branche chaude relié par une tuyauterie extérieure à la branche chaude, à chacun des éléments de prélèvement.

Une sonde de température est disposée à l'intérieur de chacun des éléments de prélèvement. De plus, une sonde de température peut être disposée également à l'intérieur de l'élément de réintroduction du fluide.

Ce dispositif permet de réaliser un bon mélange du fluide primaire avant la mesure mais la vitesse de circulation du fluide primaire dans le circuit de mesure est relativement faible, si bien que le temps de réponse du dispositif de mesure n'est pas extrêmement rapide.

En outre, le dispositif est d'une structure relativement complexe et comporte des tuyauteries à l'extérieur de la canalisation primaire. Il peut en résulter en particulier des difficultés au moment de la pose d'un matériau calorifuge autour de la canalisation primaire.

Le but de l'invention est donc de proposer un dispositif de mesure de la température du fluide de refroidissement primaire d'un réacteur nucléaire comprenant une cuve dans laquelle est disposé le coeur du réacteur et un circuit primaire ayant au moins une boucle sur laquelle est disposé un générateur de vapeur et qui comporte des tuyauteries dans lesquelles circule le fluide de refroidissement primaire du réacteur, le dispositif de mesure comportant un corps métallique fixé dans la paroi d'une canalisation primaire, de manière à présenter une partie en saillie à l'intérieur de la canalisation primaire, percé d'au moins un canal communiquant avec le volume intérieur de la canalisation primaire par des ouvertures et renfermant une sonde de mesure de température, ce dispositif permettant d'effectuer des mesures de température fiables avec un temps de réponse rapide et présentant une structure simple permettant de faciliter son montage sur une canalisation du circuit primaire.

Dans ce but, le corps métallique du dispositif suivant l'invention est percé d'un premier et d'un second canal de direction sensiblement radiale par rapport à la canalisation primaire reliés entre eux au voisinage de l'une de leurs extrémités, par une partie de jonction d'un troisième canal percé dans le corps métallique et recoupant le premier canal et le second canal,
- le premier canal communiquant avec le volume intérieur de la canalisation par l'intermédiaire d'une pluralité d'ouvertures d'entrée de fluide de refroidissement réparties dans une direction sensiblement radiale du corps métallique,
- et le second canal qui comporte une partie sensiblement cylindrique dans laquelle débouche la partie de jonction du canal de liaison, dans une disposition excentrée par rapport à l'axe du second canal et dans une direction sensiblement tangentielle par rapport à la paroi de la partie cylindrique du second canal, communiquant avec le volume intérieur de la canalisation par au moins une ouverture de sortie de fluide de refroidissement et renfermant la sonde de mesure de température, dans une zone située entre l'extrémité du second canal reliée au premier canal et l'ouverture de sortie.

Afin de bien faire comprendre l'invention, on va maintenant décrire, à titre d'exemple non limitatif, en se référant aux figures jointes en annexe, plusieurs modes de réalisation d'un dispositif de mesure suivant l'invention.

La figure 1 est une vue en coupe axiale d'un dispositif suivant l'invention et suivant un premier mode de réalisation.

La figure 2 est une vue en coupe suivant 2-2 de la figure 1.

La figure 3 est une vue en coupe suivant 3-3 de la figure 1.

la figure 4 est une vue en coupe axiale d'un dispositif suivant l'invention et suivant un second mode de réalisation.

La figure 5 est une vue en coupe suivant 5-5 de la figure 4.

La figure 6 est une vue en coupe axiale d'un dispositif suivant l'invention et suivant un troisième mode de réalisation.

La figure 7 est une vue en coupe suivant 7-7 de la figure 6.

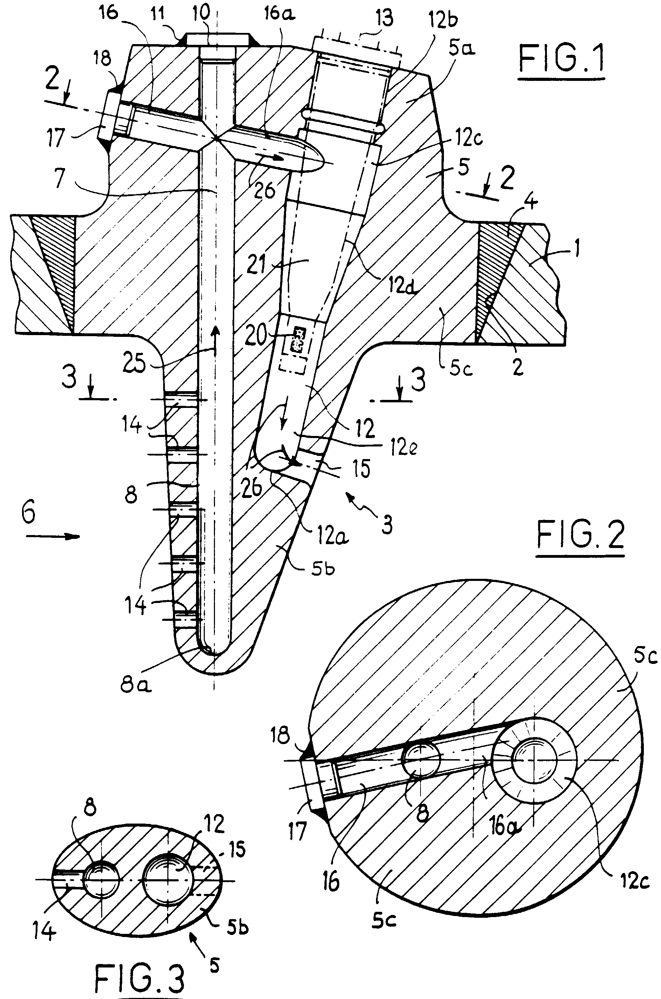

Sur la figure 1, on voit une partie d'une canalisation primaire 1 d'un réacteur nucléaire à eau sous pression constituée par une branche chaude reliant la cuve au générateur de vapeur du réacteur nucléaire.

La branche chaude qui présente un grand diamètre et une forte épaisseur de paroi est traversée par une ouverture 2 dans laquelle est rapporté et fixé par un joint de soudure 4, le dispositif de mesure de température 3 suivant l'invention réalisé sous la forme d'une écope.

L'écope comporte un corps métallique massif 5 ayant une partie externe 5a saillante à l'extérieur de la canalisation primaire 1, lorsque le corps métallique 5 est rapporté et fixé dans l'ouverture 2, une partie interne 5b saillante à l'intérieur de la canalisation 1 et une partie intermédiaire cylindrique 5c engagée dans la paroi de la canalisation, par l'intermédiaire de laquelle le corps métallique 5 est fixé sur la canalisation primaire 1.

La partie 5c du corps métallique 5 a une forme sensiblement cylindrique à section circulaire, comme il est visible sur la figure 2. L'axe de cette partie 5c qui définit la direction axiale du corps métallique 5 est placé dans une disposition sensiblement radiale par rapport à la canalisation 1, lors du montage et de la fixation du dispositif de mesure 3 sur la canalisation.

La partie interne 5b du corps métallique saillante à l'intérieur de la canalisation 1 présente une forme sensiblement conique et une section ellipsoïdale comme il est visible sur la figure 3. Cette forme permet de limiter les pertes de charge, lors de la circulation du fluide primaire à l'intérieur de la canalisation 1, dans la direction axiale de la canalisation 1 et dans le sens de la flèche 6.

Le corps métallique 5 de l'écope est percé dans une direction axiale 7 correspondant à une direction radiale de la canalisation 1, pour constituer un premier canal rectiligne 8 comportant une extrémité fermée 8a au voisinage de l'extrémité de la partie interne 5b du corps métallique 5 et débouchant, à l'extérieur de la canalisation 1, sur la surface externe de la partie 5a du corps métallique 5. L'extrémité du canal 8 débouchant à l'extérieur de la canalisation 1 est fermée par un bouchon 10 fixé de manière étanche par un joint de soudure 11 annulaire, sur la partie externe 5a du corps métallique 5.

Le corps métallique 5 est également percé dans une direction 13 faiblement inclinée par rapport à la direction axiale 7 et sensiblement radiale par rapport à la canalisation 1, pour constituer un second canal 12 comportant une première extrémité fermée 12a à l'intérieur de la partie interne 5b du corps métallique 5 et une seconde extrémité débouchant, à l'extérieur de la canalisation 1, sur la surface extérieure de la partie externe 5a du corps métallique 5.

La paroi interne du canal 12 est usinée pour constituer successivement, entre son extrémité débouchante et son extrémité fermée 12a, une partie taraudée 12b, une partie cylindrique lisse à grand diamètre 12c, une partie tronconique 12d et une partie cylindrique lisse à faible diamètre 12e.

Le corps métallique 5 de l'écope est percé dans des directions transversales pour constituer une pluralité d'ouvertures d'entrée de fluide de refroidissement 14 mettant en communication le volume intérieur de la canalisation 1 et le premier canal 8, réparties suivant la direction axiale du corps métallique 5 correspondant à une direction radiale de la canalisation 1.

Le corps métallique 5 est également percé pour constituer une ouverture de sortie de fluide 15 mettant en communication l'extrémité 12a du second canal 12 avec le volume intérieur de la canalisation 1.

Enfin, le corps métallique 5 est percé dans une direction oblique pour constituer un canal rectiligne 16 mettant en communication les canaux 8 et 12, par une partie de jonction 16a située à l'intérieur de la partie externe 5a du corps métallique, dans une zone des canaux 8 et 12 éloignée de leurs extrémités fermées 8a et 12a.

Le canal 16 qui débouche à l'une de ses extrémités sur la face externe de la partie 5a du corps métallique 5, à l'extérieur de la canalisation 1, est fermé par un bouchon 17 fixé de manière étanche par un joint de soudure annulaire 18 sur la surface externe de la partie 5a du corps métallique.

Comme il est visible sur la figure 2, la partie de jonction 16a du canal 16 débouche dans la partie lisse à grand diamètre 12c du canal 12 dans une position excentrée et présente une direction tangentielle par rapport à la partie 12c du canal 12.

Un support de sonde 21 de forme cylindro-tronconique dans la partie d'extrémité duquel est fixée une sonde de mesure de température 20 est monté à l'intérieur du canal 12, de manière que la sonde de mesure 20 soit disposée dans la partie lisse 12e à faible diamètre située à l'extrémité du canal 12.

Le support de sonde 21 comporte une partie filetée qui est engagée par vissage dans la partie taraudée 12b du canal 12. La fixation étanche du support de sonde 21 dans le canal 12 est obtenue par une soudure annulaire de jonction entre la partie externe du support de sonde 21 venant en appui sur la partie externe 5a du support métallique 5 et la surface externe du support 5.

Entre sa partie filetée et sa partie d'extrémité dans laquelle est montée la sonde de mesure 20, le support de sonde 21 présente une forme tronconique, de telle sorte qu'il subsiste un espace annulaire libre autour du support de sonde 21, dans la partie 12c à grand diamètre du canal 12, cet espace annulaire dans lequel débouche la partie de liaison 16a du canal 16 constituant une chambre de mélange pour le fluide primaire dans laquelle le mélange et l'homogénéisation du fluide primaire sont obtenus par effet de cyclone.

On va maintenant décrire le fonctionnement du dispositif de mesure représenté sur les figures 1, 2 et 3.

Pendant le fonctionnement du réacteur nucléaire, un courant d'eau sous pression circule à grande vitesse (de l'ordre de 14 m/s) à l'intérieur de la branche chaude 1, dans la direction axiale et dans le sens de la flèche 6. Une partie du courant d'eau sous pression pénètre par les ouvertures 14 dans le canal 8 de l'écope.

La répartition des ouvertures 14 dans la direction radiale de la canalisation 1 permet de prélever de l'eau sous pression de refroidissement dans diverses couches stratifiées à des températures différentes, qui se forment dans le courant d'eau de refroidissement circulant dans la canalisation 1. L'eau prélevée à divers niveaux par les ouvertures 14 circule dans le premier canal 8 en direction de son extrémité externe fermée par le bouchon 10 (flèche 25).

L'eau prélevée circule ensuite dans la partie de jonction 16a du canal 16 (flèche 26), de manière à pénétrer dans la chambre de mélange 12c du canal 12.

Le courant d'eau prélevée pénètre dans la chambre 12c dans une direction tangentielle par rapport à la paroi de la chambre et dans une zone excentrée par rapport à l'axe de la chambre. Le courant d'eau de refroidisssement prélevée est mis en rotation autour de l'axe 13 du canal 12, dans l'espace annulaire situé à la périphérie du support de sonde 21 et constituant la chambre de mélange de la partie 12c du canal 12.

On obtient ainsi un mélange et une homogénéisation des prélèvements constituant le courant d'eau de refroidissement parvenant dans le canal 12.

Le courant d'eau prélevée homogénéisé en température circule à l'intérieur du canal 12, à la périphérie du support de sonde 21, en direction de la partie d'extrémité 12a du canal 12. Le courant d'eau prélevée parvenant à l'extrémité 12a du canal 12 est réinjecté dans le volume intérieur de la canalisation primaire 1 par l'ouverture 15.

Du fait de la circulation du fluide primaire à grande vitesse dans la direction axiale et dans le sens de la flèche 6, il se produit un effet de succion au niveau de l'ouverture de réinjection 15.

Il se produit donc une circulation du fluide prélevé à vitesse accélérée à l'intérieur des canaux 8, 16a et 12.

La sonde de mesure 20 est donc balayée par un courant d'eau homogénéisé en température et circulant à une vitesse sensiblement plus importante que dans le cas des dispositifs connus de l'art antérieur. Cette vitesse est généralement de l'ordre de 5 à 7 m/s. Il en résulte que le temps de réponse du dispositif de mesure de température est sensiblement réduit et que la mesure de température effectuée par la sonde 20 est beaucoup plus représentative de la valeur exacte instantanée de la température du fluide primaire dans la branche chaude 1.

De manière à améliorer la représentativité des mesures, on peut utiliser plusieurs dispositifs de mesure tels que représentés sur les figures 1, 2 et 3, ces dispositifs de mesure étant placés autour de la canalisation primaire 1 dans des dispositions situées à 120° les unes des autres autour de l'axe de la canalisation.

De préférence, les dispositifs de mesure sont placés dans un même plan de section droite de la canalisation. Afin d'obtenir une valeur représentative de la température du fluide primaire, on calcule la moyenne des valeurs mesurées par les trois dispositifs de mesure disposés à 120° autour de la canalisation.

De manière à accroître la sécurité de fonctionnement du dispositif de mesure représenté sur la figure 1, on peut utiliser une sonde de secours placée dans la partie du premier canal 8 opposée à son extrémité fermée 8a. Cette sonde de secours peut être montée dans un support qui est engagé et fixé de manière étanche dans la partie d'extrémité du canal 8, à la place du bouchon 10. La sonde de secours permet de réaliser, en cas de défaillance de la sonde 20, une mesure de température de l'eau de refroidissement prélevée par l'écope. Cette sonde de secours ne permet pas de bénéficier du mélange du fluide par effet de cyclone dans la chambre 12c mais cependant le mélange des prélèvements est suffisant pour que la mesure soit représentative de la température du fluide primaire dans la canalisation 1.

Il est également possible de remplacer le bouchon 17 de fermeture de l'extrémité du canal 16, par un dispositif de mesure de débit mettant en oeuvre la propagation d'ultrasons dans le fluide en circulation.

On peut ainsi vérifier que l'eau prélevée circule bien à l'intérieur de l'écope et mesurer la vitesse de circulation de cette eau.

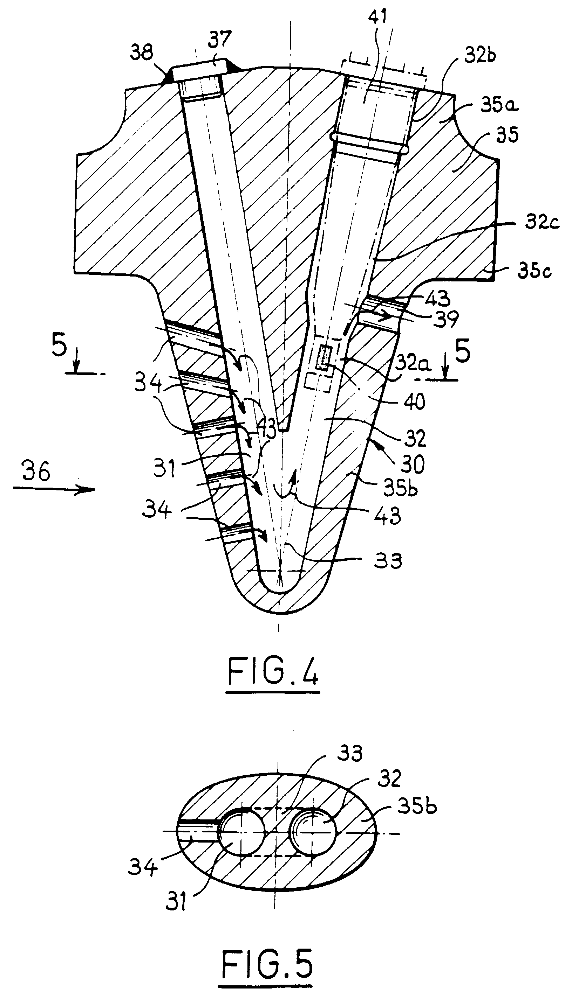

Sur les figures 4 et 5, on a représenté un second mode de réalisation d'une écope 30 d'un dispositif de mesure suivant l'invention.

L'écope 30 est constituée par un corps métallique 35 dont la forme générale est semblable à la forme du corps métallique 5 de l'écope 3 représentée sur la figure 1.

Le corps métallique 35 est fixé dans la paroi d'une canalisation primaire d'un réacteur nucléaire à eau sous pression et de préférence dans la paroi d'une branche chaude, par l'intermédiaire d'une partie médiane cylindrique 35c. Le corps métallique 35 comporte une partie externe 35a restant saillante à l'extérieur de la canalisation du circuit primaire et une partie interne 35b saillante à l'intérieur de la canalisation primaire, dont la section de forme ellipsoïdale est visible sur la figure 5.

Le fluide de refroidissement du réacteur circule dans la canalisation primaire sur laquelle est fixée l'écope 30, dans le sens et la direction donnée par la flèche 36.

Le corps métallique 35 est percé pour constituer un premier canal rectiligne 31 et un second canal rectiligne 32 qui sont concourants à leur extrémité située à l'intérieur de la partie 35b de l'écope pour constituer une partie commune 33.

Les canaux 31 et 32 ont une disposition en V de faible ouverture, leur axe faisant un angle de l'ordre de 20°.

Les canaux 31 et 32 débouchent à leur extrémité opposée à la partie commune 33, sur la face externe de la partie 35a de l'écope.

Le canal 31 est fermé à son extrémité débouchant sur la face externe de l'écope, par un bouchon 37 fixé sur la surface externe de l'écope par un joint de soudure annulaire 38.

Le corps métallique 35 est percé dans sa partie 35b d'ouvertures 34 mettant en communication le premier canal 31 avec l'espace intérieur de la canalisation, au voisinage de la partie commune 33 et dans cette partie commune.

Les ouvertures 34 sont réparties suivant la longueur de la partie 35b du corps 35, dans une direction sensiblement radiale par rapport à la canalisation. Les ouvertures 34 sont rectilignes et présentent des inclinaisons faibles et variables par rapport à la direction 36 de circulation du fluide de refroidissement dans la canalisation. Les ouvertures 34 sont disposées sur la face frontale de la partie 35b de l'écope qui entre en contact avec le courant de fluide de refroidissement circulant dans la direction de la flèche 36.

Le second canal 32 est usiné intérieurement pour constituer, successivement, depuis son extrémité externe débouchant sur la surface externe de l'écope jusqu'à son extrémité débouchant dans la partie commune 33, une partie taraudée 32b, une partie lisse tronconique 32c et une partie cylindrique d'extrémité 32a débouchant dans la partie commune 33 aux canaux 31 et 32.

La partie interne 35b du corps métallique 35 est percé d'une ouverture de sortie de fluide 39 mettant en communication le canal 32 au niveau de la jonction entre ses parties 32a et 32c, avec le volume intérieur de la canalisation.

Une sonde de température 40 fixée sur un support de sonde 41 est placée dans la partie 32a du canal 32. Le support de sonde 41 est fixé par vissage dans le canal 32, par l'intermédiaire d'une partie filetée engagée dans l'ouverture taraudée 32b. La fixation étanche du support 41 sur le corps métallique 35 est assurée par un joint de soudure déposé sur une partie saillante du support 41 et sur la surface supérieure du corps métallique 35.

On va maintenant décrire le fonctionnement du dispositif de mesure 30 représenté sur les figures 4 et 5.

Une fraction du courant d'eau de refroidissement circulant dans la canalisation primaire dans le sens et dans la direction de la flèche 36 pénètre dans le canal 31 par les ouvertures 34 et circule à l'intérieur de l'écope en direction de la partie commune 33 aux canaux 31 et 32, puis dans la partie 32a du canal 32 pour ressortir de l'écope par l'ouverture 39 (flèche 43).

L'ouverture 39 étant disposée sur le corps métallique, à l'opposé de sa face frontale venant en contact avec le courant de liquide de refroidissement 36, il se produit un effet de succion au niveau de l'ouverture 39, une aspiration à l'intérieur du canal 32 et une dépression à l'intérieur des canaux dans lesquels circule l'eau de refroidissement.

On obtient ainsi une forte accélération du fluide de refroidissement qui vient en contact avec la sonde de mesure 40 à la fin de son parcours à l'intérieur de l'écope.

On obtient ainsi une mesure de la température avec un temps de réponse réduit.

Il se produit également un mélange des prélèvements de fluide pénétrant par les ouvertures 34, à l'intérieur de la partie commune 33 aux canaux 31 et 32. Cependant, l'effet de mélange et d'homogénéisation en température du fluide est moins intense que dans le cas du dispositif représenté sur les figures 1, 2 et 3, du fait de l'absence d'une chambre de mélange par effet de cyclone.

Le dispositif selon le second mode de réalisation représenté sur les figures 4 et 5 ne permet pas non plus de monter facilement une sonde de secours et un dispositif de mesure de débit dans le corps métallique.

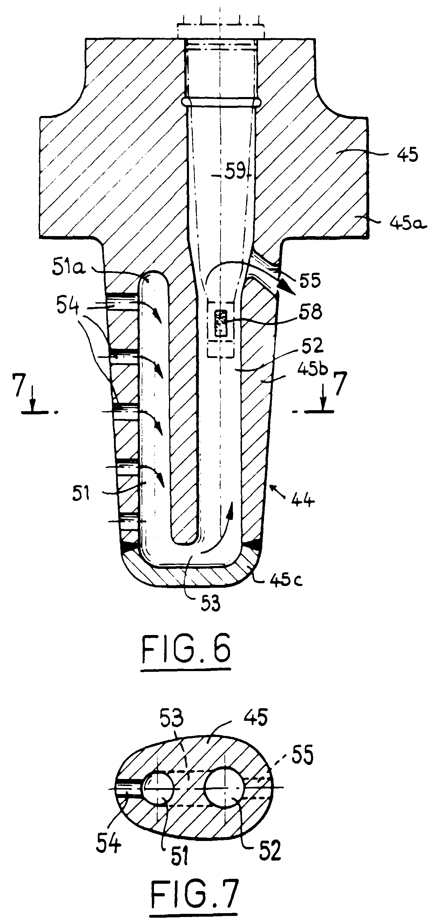

Sur les figures 6 et 7, on a représenté un troisième mode de réalisation d'une écope 44 d'un dispositif de mesure de température suivant l'invention.

Le corps métallique 45 de l'écope 44 n'est pas réalisé de manière monobloc comme dans le cas des écopes représentées sur les figures 1 et 4 mais comporte une partie massive 45a qui est fixée par soudage dans une canalisation primaire ayant un prolongement 45b destiné à venir en saillie à l'intérieur de la canalisation primaire et un fond de fermeture 45c rapporté et fixé par soudure à l'extrémité de la partie 45b du corps métallique 45.

Les parties 45a et 45b du corps métallique 45 sont percées de manière à constituer deux canaux 51 et 52 parallèles entre eux et dirigés suivant une direction radiale de la canalisation sur laquelle est montée l'écope 44.

Les canaux 51 et 52 sont reliés entre eux par une partie commune 53 sensiblement perpendiculaire aux canaux 51 et 52 et délimitée par le fond 45c.

Les canaux 51 et 52 et leur partie commune 53 présentent une disposition en U. Le canal 51 comporte un fond fermé 51a et le canal 52 débouche sur la surface externe du corps métallique 45.

Des ouvertures 54 réparties suivant la direction longitudinale du canal 51 sont percées dans la partie frontale du support métallique 45, de manière à mettre en communication à différents niveaux le canal 51 avec le volume intérieur de la canalisation sur laquelle est montée l'écope 44.

Une ouverture de sortie de fluide 55 mettant en communication le canal 52 avec le volume intérieur de la canalisation est usinée dans le corps métallique 45, à l'opposé des ouvertures 54.

Le canal 52 est usiné intérieurement pour recevoir un support de sonde 59 qui est fixé sur le corps métallique 45. Une sonde de mesure de température 58 est montée à l'extrémité du support 59 de manière à être placée dans la partie de sortie du canal 52, au voisinage de l'ouverture 55.

Le fluide de refroidissement circulant dans la canalisation pénètre dans le canal 51 par les ouvertures 54, de manière à circuler d'abord dans le canal 51, puis dans la partie commune 53 et dans le canal 52, avant de ressortir de l'écope par l'ouverture 55.

Il se produit une succion et une aspiration au niveau de l'ouverture 55, de sorte que la circulation du fluide dans le conduit en U constitué par le canal 51, le canal 52 et la partie commune 53 est fortement accélérée.

Le dispositif selon le troisième mode de réalisation représenté sur les figures 6 et 7 présente les mêmes inconvénients que le dispositif selon le second mode de réalisation représenté sur les figures 4 et 5, par rapport au dispositif selon le premier mode de réalisation constituant le mode de réalisation préférentiel.

Dans tous les cas, le fluide de refroidissement circule à une grande vitesse à l'intérieur de l'écope et le mélange des prélèvements de fluide avant la mesure de température reste suffisant pour que la mesure soit représentative de la température du fluide de refroidissement primaire.

Par rapport aux dispositifs selon l'art antérieur comportant des tuyauteries de liaison à l'intérieur de la canalisation primaire, le dispositif suivant l'invention présente une plus grande sécurité, dans la mesure où le fluide primaire reste à l'intérieur de la canalisation primaire et d'un corps métallique massif fixé par soudure dans la paroi de la canalisation primaire. En outre, le calorifugeage de la canalisation primaire peut être réalisé de manière simple, dans la mesure où l'écope ne présente qu'une partie de faible dimension en saillie par rapport à la surface extérieure de la canalisation.

Les soudures de fixation de l'écope peuvent être facilement contrôlées par radiographie.

Dans le cas du dispositif selon le premier mode de réalisation, on peut en outre réaliser de manière simple le montage d'une sonde de secours et d'un dispositif permettant de vérifier par ultrasons que la circulation du fluide dans l'écope est satisfaisante.

L'invention ne se limite pas aux modes de réalisation qui ont été décrits.

C'est ainsi qu'on peut imaginer des écopes présentant une forme différente comportant des canaux ayant une disposition relative différente de celles qui ont été décrites.

Les dispositifs de mesure suivant l'invention peuvent être associés en nombre quelconque pour effectuer des mesures de température en différents points de la canalisation primaire.

Enfin, l'invention s'applique à la mesure de la température d'un fluide de refroidissement dans tout réacteur nucléaire dans lequel le fluide est mis en circulation dans des canalisations d'un circuit primaire.

## Revendications

1. Dispositif de mesure de la température du fluide de refroidissement primaire d'un réacteur nucléaire comprenant une cuve dans laquelle est disposé le coeur du réacteur et un circuit primaire ayant au moins une boucle sur laquelle est disposé un générateur de vapeur et qui comporte des tuyauteries (1) dans lesquelles circule le fluide de refroidissement primaire du réacteur, le dispositif de mesure (3; 30; 44) comportant un corps métallique (5; 35; 45) fixé dans la paroi d'une canalisation primaire (1), de manière à présenter une partie saillante (5b; 35b; 45b) à l'intérieur de la canalisation primaire (1), percé d'au moins un canal (8, 12; 31, 32; 51, 52) communiquant avec le volume intérieur de la canalisation primaire par des ouvertures (14; 34; 54) et renfermant une sonde de mesure de température (20; 40; 58), caractérisé par le fait que le corps métallique est percé d'un premier et d'un second canal (8, 12; 31, 32; 51, 52) de direction sensiblement radiale par rapport à la canalisation (1) reliés entre eux au voisinage de l'une de leurs extrémités, par une partie de jonction (16a) d'un troisième canal (16) percé dans le corps métallique (5) et recoupant le premier canal (8) et le second canal (12),
- le premier canal (8; 31; 51) communiquant avec le volume intérieur de la canalisation (1) par l'intermédiaire d'une pluralité d'ouvertures (14; 34; 54) d'entrée du fluide de refroidissement réparties dans une direction sensiblement radiale du corps métallique (5; 35; 45),
- et le second canal (12; 32; 52) qui comporte une partie (12c) sensiblement cylindrique dans laquelle débouche la partie de jonction (16a) du canal de liaison (16), dans une disposition excentrée par rapport à l'axe du second canal (12) et dans une direction sensiblement tangentielle par rapport à la paroi de la partie cylindrique (12c) du second canal (12), communiquant avec le volume intérieur de la canalisation (1) par au moins une ouverture de sortie de fluide de refroidissement (15; 39; 55) et renfermant la sonde de mesure de température (20; 40; 58), dans une zone située entre l'extrémité du second canal (12; 32; 52) reliée au premier canal (8; 31; 51) et l'ouverture de sortie (15; 39; 55).

2. Dispositif selon la revendication 1, caractérisé par le fait que les ouvertures d'entrée de fluide de refroidissement (14; 34; 54) sont situées sur une face frontale de la partie du corps métallique (5; 35; 45) saillante à l'intérieur de la canalisation (1), dans le sens d'écoulement du fluide de refroidissement (6; 36) et que l'ouverture de sortie de fluide de refroidissement (15; 39; 55) est située à l'opposé des ouvertures d'entrée de fluide de refroidissement, dans le sens de circulation (6; 36) du fluide de refroidissement dans la canalisation (1).

3. Dispositif suivant l'une quelconque des revendications 1 et 2, caractérisé par le fait que le premier canal (8) est rectiligne et comporte une extrémité fermée à l'intérieur de la partie (5b) du corps métallique (5) saillante à l'intérieur de la canalisation (1) et une seconde extrémité débouchant sur une surface du corps métallique (5) disposée à l'extérieur de la canalisation (1).

4. Dispositif suivant la revendication 3, caractérisé par le fait que le second canal (12) comporte une extrémité fermée (12a) située à l'intérieur de la partie (5b) du corps métallique (5) saillante à l'intérieur de la canalisation et une extrémité opposée débouchant sur une surface du corps métallique (5) disposée à l'extérieur de la canalisation (1), l'ouverture de sortie (15) du fluide de refroidissement étant en communication avec le second canal (12), au voisinage de son extrémité fermée (12a).

5. Dispositif suivant l'une quelconque des revendications 1 à 4, caractérisé par le fait que le premier canal (8) et le second canal (12) sont reliés entre eux, dans une partie du corps métallique (5) située à l'extérieur de la canalisation (1).

## Patentansprüche

1. Vorrichtung zur Messung der Temperatur des Primärkühlmittels eines Kernreaktors mit einem Behälter, in dem der Reaktorkern und ein Primärkreislauf angeordnet sind, wobei der Primärkreislauf mindestens einen Kreis aufweist, in dem ein Dampferzeuger angeordnet ist und der Rohrleitungen (1) aufweist, in denen das Primärkühlfluid des Reaktors zirkuliert, wobei die Meßvorrichtung (3, 30, 44) einen Metallkörper (5; 35; 45) aufweist, der in der Wandung einer Primärkanalisation (1) befestigt ist, derart, daß er einen in das Innere der Primärkanalisation (1) vorstehenden Teil (5b; 35b; 45b) aufweist, wobei der Körper mit mindestens einem Kanal (8, 12; 31, 32; 51, 52) durchbohrt ist, der mit dem Innenvolumen der Primärkanalisation über Öffnungen (14; 34; 54) in Verbindung steht und eine Temperaturmeßsonde (20; 40; 58) aufweist,
dadurch **gekennzeichnet**, daß
der Metallkörper einen ersten und einen zweiten Kanal (8, 12; 31, 32; 51, 52) aufweist, die im wesentlichen radial bezüglich der Kanalisation (1) verlaufen und die untereinander in der Nähe einer ihrer Enden durch einen Verbindungsteil (16a) eines dritten Kanals (16) verbunden sind, der in den Metallkörper (5) gebohrt ist und den ersten Kanal (8) und den zweiten Kanal (12) verbindet,
- der erste Kanal (8; 31; 51) mit dem Innenvolumen der Kanalisation (1) über eine Mehrzahl von Eingangsöffnungen für das Kühlfluid (14; 34; 54) in Verbindung steht, die in einer Richtung, die im wesentlichen radial zum Metallkörper (5; 35; 45) verläuft, angeordnet sind und
- der zweite Kanal (12; 32; 52), der einen im wesentlichen zylindrischen Bereich (12c) aufweist, in dem der Verbindungsteil (16a) des Verbindungskanals (16) mündet, eine bezüglich der Achse des zweiten Kanals (12) exzentrische Lage aufweist und in einer im wesentlichen tangentialen Richtung bezüglich der Wandung des zylinderförmigen Teils (12c) des zweiten Kanals (12) angeordnet ist, mit dem Innenvolumen der Kanalisation (1) über mindestens eine Ausgangsöffnung des Kühlfluids (15; 39; 55) in Verbindung steht und eine Temperaturmeßsonde (20; 40; 58) einschließt, in einem Bereich, der zwischen dem Ende des zweiten Kanals (12; 32; 52), der an den ersten Kanal (8; 31; 51) angeschlossen ist, und der Ausgangsöffnung (15; 39; 55) gelegen ist.

2. Vorrichtung nach Anspruch 1,
dadurch gekennzeichnet, daß
die Eingangsöffnungen des Kühlfluids (14; 34; 54) auf einer Stirnseite des Teils des Metallkörpers (5; 35; 45), der in das Innere der Kanalisation (1) hineinragt, in Fließrichtung des Kühlfluids (6; 36) angeordnet sind und dadurch, daß die Ausgangsöffnung für das Kühlfluid (15; 39; 55) gegenüber den Eingangsöffnungen des Kühlfluids in Fließrichtung (6; 36) des Kühlfluids in der Kanalisation (1) angeordnet ist.

3. Vorrichtung nach einem der Ansprüche 1 und 2,
dadurch gekennzeichnet, daß
der erste Kanal (8) geradlinig ist und ein geschlossenes Ende im Inneren des Bereichs (5b) des Metallkörpers (5) aufweist, der ins Innere der Kanalisation (1) hineinragt und ein zweites Ende, welches auf einer Oberfläche des Metallkörpers (5) mündet, die außerhalb der Kanalisation (1) angeordnet ist.

4. Vorrichtung nach Anspruch 3,
dadurch gekennzeichnet, daß
der zweite Kanal (12) ein geschlossenes Ende (12a) aufweist, welches im Inneren des Bereichs (5b) des Metallkörpers (5) angeordnet ist, welcher in das Innere der Kanalisation hineinragt und ein entgegengesetztes Ende, welches auf einer Oberfläche des Metallkörpers (5) mündet, die außerhalb der Kanalisation (1) angeordnet ist, wobei die Ausgangsöffnung (15) des Kühlfluids mit dem zweiten Kanal (12) in der Nähe seines geschlossenen Endes (12a) verbunden ist.

5. Vorrichtung nach einem der Ansprüche 1 bis 4,
dadurch gekennzeichnet, daß
der erste Kanal (8) und der zweite Kanal (12) untereinander in einem Bereich des Metallkörpers (5) verbunden sind, der außerhalb der Kanalisation (1) gelegen ist.

## Claims

1. Device for measuring the temperature of the primary coolant of a nuclear reactor comprising a container in which is located the reactor core and a primary circuit having at least one loop on which is mounted a steam generator and which comprises tubing (1) in which the primary coolant of the reactor circulates, the measuring device (3; 30; 44) having a metal body (5; 35; 45) fixed in the wall of a primary conduit (1), so as to have a part (5b; 35b; 45b) projecting inside the primary conduit (1), drilled with at least one channel (8, 12; 31, 32; 51, 52) communicating with the internal space of the primary conduit through openings (14; 34; 54) and containing a temperature measuring probe (20; 40; 58), characterised in that the metal body is drilled with a first and second channel (8, 12; 31, 32; 51, 52) which extend substantially radially relative to the conduit (1) and which are connected to each other, close to one of their ends, by a junction member (16a) of a third channel (16) drilled in the metal body (5) and intersecting with the first channel (8) and the second channel (12),
the first channel (8; 31; 51) communicating with the interior of the conduit (1) via a plurality of coolant inlet ports (14; 34; 54), distributed in a substantially radial direction of the metal body (5; 35; 45),
and the second channel (12; 32; 52) which comprises a substantially cylindrical portion (12c) into which the junction member (16a) of the connecting channel (16) opens, in an eccentric arrangement relative to the axis of the second channel (12) and in a substantially tangential direction relative to the wall of the cylindrical portion (12c) of the second channel (12), communicating with the interior of the conduit (1) through at least one coolant outlet port (15; 39; 55) and containing the temperature measuring probe (20; 40; 58), in a zone located between the end of the second channel (12; 32; 52) connected to the first channel (8; 31; 51) and the outlet port (15; 39; 55).

2. Device according to claim 1, characterised in that the coolant inlet ports (14; 34; 54) are located on a front surface of that part of the metal body (5; 35; 45) which projects inside the conduit (1), in the direction of flow of the coolant (6; 36), and in that the coolant outlet port (15; 39; 55) is located opposite the coolant inlet ports, in the direction of circulation (6; 36) of the coolant in the conduit (1).

3. Device according to one of claims 1 and 2, characterised in that the first channel (8) is straight and has one end closed off inside the part (5b) of the metal body (5) which projects inside the conduit (1) and the other end opening onto a surface of the metal body (5) located outside the conduit (1).

4. Device according to claim 3, characterised in that the second channel (12) has one closed end (12a) located inside the part (5b) of the metal body (5) projecting inside the conduit and an opposite end opening onto a surface of the metal body (5) arranged outside the conduit (1), the coolant outlet port (15) communicating with the second channel (12), close to its closed end (12a).

5. Device according to any one of claims 1 to 4, characterised in that the first channel (8) and the second channel (12) are connected to each other, in a part of the metal body (5) located outside the conduit (1).
